# EUROPÄISCHE PATENTSCHRIFT

(11) **EP 1 985 433 B1**
(45) Veröffentlichungstag und Bekanntmachung des Hinweises auf die Patenterteilung: **04.05.2011**
(21) Anmeldenummer: 08007905.6
(22) Anmeldetag: 24.04.2008
(51) Int. Cl.: B29C 47/90, B29C 47/34, B29C 47/92

(54) **Verfahren zur Herstellung von rohrförmigen Kunststoffprofilen**
Method for manufacturing tubular plastic profiles
Procédé de fabrication de profilés en plastique tubulaires

(30) Priorität: 25.04.2007 DE 102007019854
(43) Veröffentlichungstag der Anmeldung: 29.10.2008
(73) Patentinhaber: INOEX GmbH, 32547 Bad Oeynhausen (DE)
(72) Erfinder: Klose, Reinhard, 31737 Rinteln (DE); Schmuhl, Jörg, Prof. Dr., 15711 Königs Wusterhausen (DE); Mirjana Strahinovic, D-33607 Bielefeld (DE)
(74) Vertreter: Seewald, Jürgen

(56) Entgegenhaltungen:
- EP-A- 1 627 724
- US-A- 4 238 435
- DATABASE WPI Week 198124 Thomson Scientific, London, GB; AN 1981-42876D XP002494060 -& JP 56 044628 A (KASAMATSU KAKO KENK) 23. April 1981 (1981-04-23)

## Beschreibung

Die vorliegende Erfindung betrifft ein Verfahren zur Herstellung von rohrförmigen Kunststoffprofilen, deren Dimension sich über die Länge ändert.

Bei der Herstellung von Kunststoffprofilen, insbesondere von Kunststoffrohren war es üblich, die gesamte Extrusionslinie für einen Dimensionswechsel, d.h., einen Wechsel des Querschnitts des extrudierten Kunststoffprofils, stillzusetzen. Anschließend mussten dann alle vom Dimensionswechsel betroffenen Komponenten der Extrusionslinie ausgetauscht werden. Das betraf insbesondere den Rohrkopf des Extruders, die Kalibrierhülse und die Abdichtungen von Vakuumtank und Kühleinheiten. Des weiteren mussten andere Einrichtungen, wie der Raupenabzug, die Trenneinrichtung und Unterstützungsvorrichtungen für den extrudierten Hohlstrang auf die neue Dimension eingestellt werden. Die dadurch verursachten Stillstandzeiten der Extrusionslinie, sowie der Bauaufwand beim Wechseln der einzelnen Ausrüstungsteile und die Verluste an Kunststoffmaterial waren auf der Kostenseite zu verkraften, solange mit großen Auftragslosen gearbeitet wurde. Unter den heutigen Produktionsbedingungen werden die Auftragslose aber immer kleiner, so dass die oben geschilderten Umstände beim Dimensionswechsel den erzielbaren Gewinn drücken.

Seit wenigen Jahren sind daher Ausrüstungen verfügbar, die einen Dimensionswechsel eines extrudierten Kunststoffprofils während des laufenden Produktionsprozesses ermöglichen. So ist z. B. in der DE 198 43 341 A1 ein verstellbarer Rohrkopf, in der DE 198 43 340 C2 und der DE 103 18 137 B3 eine verstellbare Kalibrierhülse, in DE 202 07 037 U1 eine verstellbare Abdichtung und in der DE 102 40 718 A1 ein verstellbarer Raupenabzug beschrieben.

Aus der EP 1 627 724 A2 ist ein gattungsgemäßes Verfahren bekannt. Dieses Verfahren wird in einer Extrusionslinie ausgeführt, die einen Extruder, eine stufenlos auf verschiedene Durchmesser im laufenden Betrieb einstellbare Kalibrierhülse und eine Abzugseinheit mit regelbarer Abzugsgeschwindigkeit aufweist. Bei diesem Verfahren erfolgt die Einstellung der Wanddicke des extrudierten Rohres durch eine koordinierte Veränderung des Massendurchsatzes durch den Extruder und/oder der Abzugsgeschwindigkeit des extrudierten Rohres.

Wenn auf einer derartigen, für einen Dimensionswechsel im laufenden Betrieb ausgelegten Extrusionslinie ein anderer Rohrdurchmesser gefahren werden soll, wird zunächst der Ringspalt des Rohrkopfes verstellt und anschließend werden sukzessive die Kalibrierhülse, die Abdichtungen, die Rohrunterstützungen, der Raupenabzug und die Sägeeinheit auf den neuen Durchmesser eingestellt. Dabei ergibt sich zwischen dem alten Durchmesser und dem neuen Durchmesser im extrudierten Rohrstrang ein etwa konisches Ausschussstück, welches in der Sägeeinheit abgeschnitten wird.

In der US 4,238,435 A wird ein Verfahren zur Herstellung von künstlichen Bambusrohren, bestehend aus einem thermoplastischen Material, beschrieben. Die dabei zum Einsatz kommende Extrusionslinie weist einen Extruder mit einer Extruderdüse auf, ein daran sich anschließendes Wasserbad sowie eine Abzugseinheit und eine Säge zum Ablängen einzelner Bambusrohre von dem extrudierten Strang. Die für Bambusrohr typischen voneinander beabstandeten Knoten werden dadurch produziert, dass bei gleichbleibendem Massendurchsatz durch die Extruderdüse die Abzugseinheit kurzzeitig abgestellt wird. Da der Materialstrom aus der Extruderdüse gleich bleibt, bildet sich in dem freien Raum zwischen der Extruderdüse und dem Wasserbad eine Art Blase, die sofort gekühlt wird. Der Eingang des nachfolgenden Wasserbades wird durch eine flexible Dichtung gebildet, deren Durchlassöffnung sich an den Umfang des extrudierten Rohres anpasst. Da die vor dem Wasserbad produzierten Blasen bzw. Knoten durch die sofortige Kühlung eine gewisse Festigkeit erreicht haben, können sie die Durchlassöffnung der flexiblen Dichtung unbeschadet passieren, wobei durch die Durchlassöffnung in gewollter Weise oberflächliche Profilierungen des Knotens eingebracht werden.

Ein dem in der US 4,283,435 A beschriebenen Verfahren sehr ähnliches Verfahren ist in der JP 56 044 628 A beschrieben.

Aufgabe der vorliegenden Erfindung ist es, für ein gattungsgemäßes Verfahren eine neue Fahrweise zur Verfügung zu stellen.

Diese Aufgabe wird erfindungsgemäß mit einem Verfahren gelöst, welches die Merkmale des Anspruchs 1 aufweist.

Zur Auslegung des Anspruchs 1 sei hier bemerkt, dass unter Auf- und Zufahren der Kalibrierhülse die Vergrößerung bzw. Verkleinerung des Durchmessers der Kalibierhülse und unter der Dimension des rohrförmigen Kunststoffprofils dessen Durchmesser und optional zusätzlich dessen Wandstärke zu verstehen ist.

Durch eine definierte Änderung des Durchmessers der Kalibrierhülse bei laufender Produktion kann jede gewünschte Form des rohrförmigen Kunststoffprofils mit entsprechender Durchmesseränderung hergestellt werden.

Wenn in vorteilhafter Weise eine Wanddickenänderung des extrudierten Profils erfolgen soll, wird das dadurch erreicht, dass die Abzugsgeschwindigkeit und/oder der Massendurchsatz durch den Extruder geändert wird.

Die Änderungen des Durchmessers der Kalibrierhülse und gegebenenfalls zusätzlich der Abzugsgeschwindigkeit und/oder des Massendurchsatzes am Extruder werden periodisch vorgenommen. So kann z. B. der Durchmesser der Kalibrierhülse von dem größten Durchmesser des herzustellenden rohrförmigen Kunststoffprofils auf den kleinsten Durchmesser dieses Profils zugefahren und anschließend wieder von dem kleinsten Durchmesser des herzustellenden Kunststoffprofils auf den größten Durchmesser dieses Profils aufgefahren werden. Dadurch kann u.a. bei entsprechender Steuerung der Kalibrierhülse ein konusförmiges Kunststoffprofil hergestellt werden, wobei die einzelnen Kunststoffprofile im extrudierten Strang Fuß an Fuß bzw. Kopf an Kopf aneinander liegen. Sie müssen dann in diesen Bereichen zum Erhalt der einzelnen rohrförmigen Kunststoffprofile nur noch getrennt werden. Dadurch wird Abfall vermieden. Bei entsprechender Steuerung der Abzugsgeschwindigkeit und/oder des Massendurchsatzes durch den Extruder kann die Wandstärke dieses konusförmigen Kunststoffprofils so eingestellt werden, dass sie beispielsweise vom größten Durchmesser zum kleinsten Durchmesser abnimmt oder aber über die gesamte Länge des Profils gleich bleibt.

Die Erfindung wird nachstehend anhand von Ausführungsbeispielen näher erläutert. In der dazugehörigen Zeichnung zeigt:
- Fig. 1: eine Extrusionsanlage zur Herstellung von rohrförmigen Kunststoffprofilen mit ihren Hauptkomponenten in schemati- scher Darstellung,
- Fig. 2: einen Querschnitt durch ein in der Extrusionslinie gemäß Fig. 1 hergestelltes Kunststoffprofil nach dem Ablängen von dem extrudierten Hohlstrang in einer ersten Ausführungsform,
- Fig. 2.1: ein Kunststoffprofil in einer Darstellung gemäß Fig. 2 in einer zweiten Ausführungsform,
- Fig. 3: ein Kunststoffprofil in einer Darstellung gemäß Fig. 2 in einer dritten Ausführungsform,
- Fig. 3.1: ein Kunststoffprofil in einer Darstellung gemäß Fig. 2 in einer vierten Ausführungsform,
- Fig. 4: ein Kunststoffprofil in einer Darstellung gemäß Fig. 2 in einer fünften Ausführungsform,
- Fig. 5: ein Kunststoffprofil in einer Darstellung gemäß Fig. 2 in einer sechsten Ausführungsform,
- Fig. 6: ein Kunststoffprofil in einer Darstellung gemäß Fig. 2 in einer siebenten Ausführungsform, und
- Fig. 7: ein Kunststoffprofil in einer Darstellung gemäß Fig. 2 in einer achten Ausführungsform.

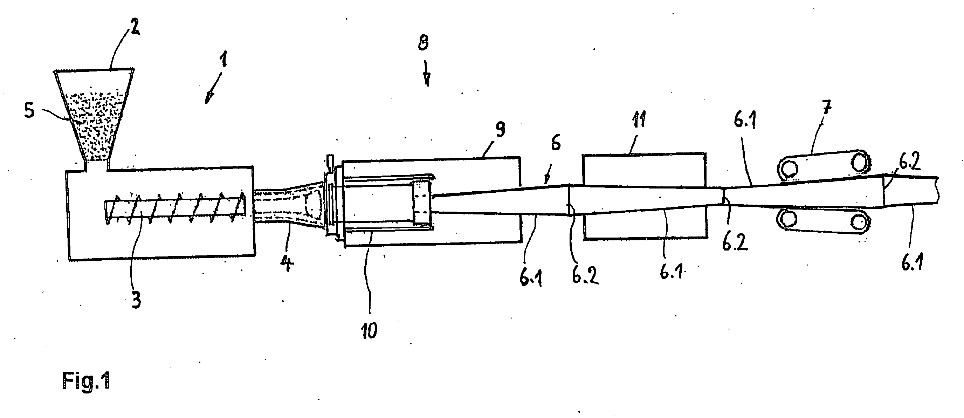

Die in Fig. 1 dargestellte Extrusionslinie umfasst einen Extruder 1 mit einem Aufgabetrichter 2, einer Extruderschnecke 3 und einem Extrusionswerkzeug 4. Über den Aufgabetrichter 2 wird ein thermoplastischer Kunststoff 5 in Granulat- oder Pulverform dem Extruder 1 zugeführt. In dem Extruder 1 wird das Granulat bzw. Pulver erwärmt, geknetet und plastifiziert. Anschließend wird der Kunststoff als formbare Masse durch die Extruderschnecke 3 in das Extrusionswerkzeug 4 gefördert und dort durch einen ringförmigen Durchtrittsspalt gedrückt.

Nach dem Austritt aus dem Extrusionswerkzeug 4 wird der heiße, noch verformbare Hohlstrang 6 mittels einer am Ende der Extrusionslinie angeordneten Abzugseinheit 7 durch eine Kalibrier- und Kühleinheit 8 gezogen, die einen Vakuumtank 9 mit einer an dessen Eingang angeordneten, perforierten Kalibrierhülse 10 aufweist. Die Kalibrierhülse 10 ist stufenlos im Durchmesser verstellbar. Derartige Kalibrierhülsen 10 sind Stand der Technik und können beispielsweise so wie die in der DE 198 43 340 C2 oder DE 10 2005 002 820 B3 offenbarten Hülsen aufgebaut sein. Nach dem Verlassen der Kalibrier- und Kühleinheit 8 tritt der Hohlstrang 6 in eine Kühlstrecke 11 ein, in der er auf Raumtemperatur abgekühlt wird. Der Abzugseinheit 7 schließt sich eine nicht dargestellte Sägeeinheit an, in der die herzustellenden Kunststoffprofile 6.1 von dem Hohlstrang 6 abgelängt werden.

Die in Fig. 1 gezeigte und oben beschriebene Extrusionslinie wird nach dem Stand der Technik dazu verwendet, bei laufender Produktion von einem Rohrnenndurchmesser auf einen anderen Rohrnenndurchmesser umzustellen. Während der Umstellphase, in der alle relevanten Komponenten der Extrusionslinie auf den neuen Durchmesser umgestellt werden, wird in dem extrudierten Rohrstrang ein Ausschussstück produziert, welches einen annähernd konischen Querschnitt aufweist, und an seinem einen Ende den Nenndurchmesser des zuvor produzierten Rohres und an seinem anderen Ende den Nenndurchmessers des neu produzierten Rohres aufweist. Dieses Ausschussstück wird am Ende der Extrusionslinie aus dem Rohrstrang ausgeschnitten und als Abfall verworfen.

Mit dem erfindungsgemäßen Verfahren wird eine neue Fahrweise einer solchen Extrusionslinie zur Verfügung gestellt, welche es gestattet, rohrförmige Kunststoffprofile 6.1 herzustellen, deren Dimension sich über die Länge ändert.

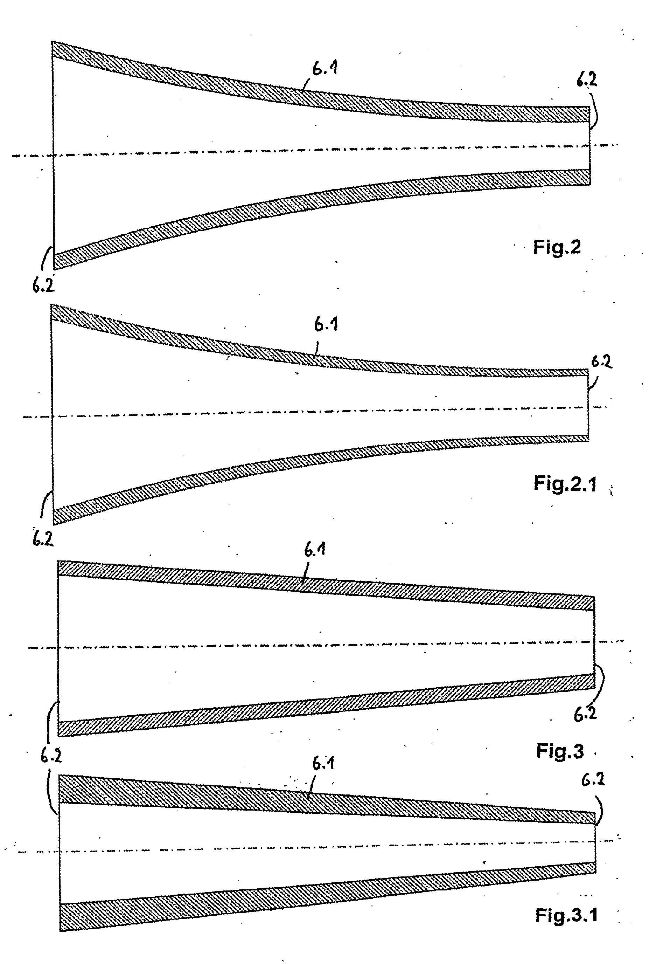

In den Figuren 2 - 7 sind exemplarisch rohrförmige Kunststoffprofile 6.1 dargestellt, die mit dem erfindungsgemäßen Verfahren herstellbar sind.

Das in Fig. 2 gezeigte Kunststoffprofil 6.1 entsteht, wenn die Kalibrierhülse 10 über ein bestimmtes Zeitintervall bzw. die Länge des Kunststoffprofils 6.1 linear zugefahren und gleichzeitig die Abzugsgeschwindigkeit der Abzugseinheit 7 linear vergrößert wird. Es entsteht eine konkave Außenform des Kunststoffprofils 6.1 bei gleich bleibender Wandstärke. Anstelle der Verringerung der Abzugsgeschwindigkeit bzw. in Kombination mit dieser kann auch der Massendurchsatz durch den Extruder 1 entsprechend verringert werden.

Das in Fig. 2.1 gezeigte Kunststoffprofil 6.1 hat die gleiche Außenform wie das in Fig. 1 gezeigte, mit dem Unterschied, dass sich seine Wandstärke vom größten zum kleinsten Durchmesser hin verringert. Eine solche Dimension ist herstellbar, in dem die Kalibrierhülse 10 linear zugefahren und die Abzugsgeschwindigkeit nicht linear erhöht wird. Auch hier ist wieder eine Kombination von Änderung der Abzugsgeschwindigkeit und des Massendurchsatzes durch den Extruder 1 möglich.

In den Fig. 3 - 6 sind weitere Kunststoffprofile 6.1 mit unterschiedlichen Außenkonturen bei gleich bleibender Wandstärke dargestellt. Natürlich kann auch bei diesen Kunststoffprofilen 6.1 über deren Länge die Wandstärke variiert werden.

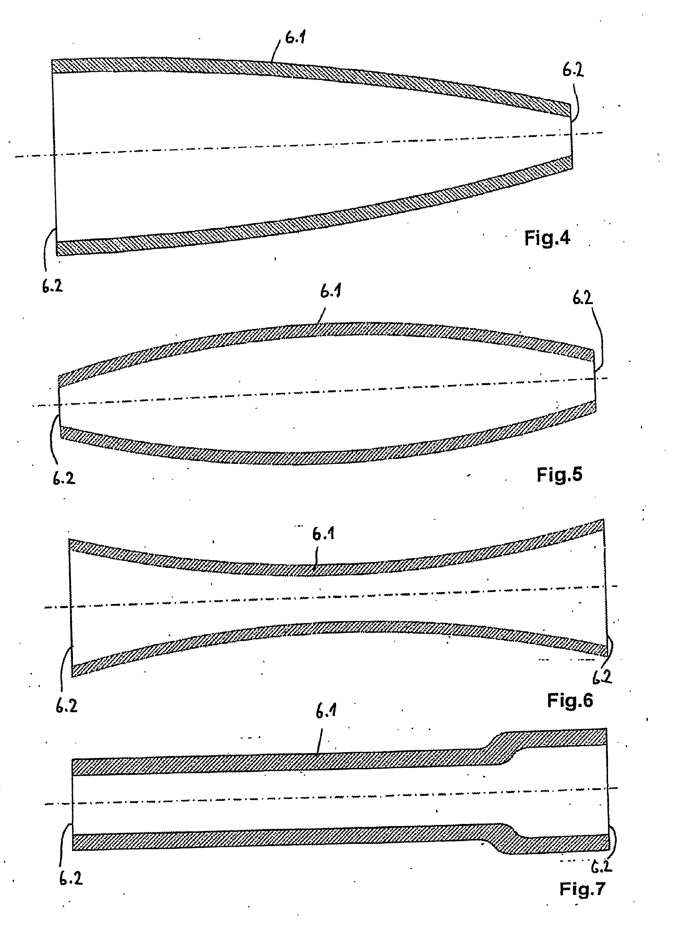

In Fig. 7 ist eine weitere Form eines nach dem erfindungsgemäßen Verfahren herstellbaren Kunststoffprofils 6.1 dargestellt. Bei diesem Kunststoffprofil 6.1 bleibt über einen langen Abschnitt der Rohrdurchmesser konstant, der dann an einem Ende des Kunststoffprofils 6.1 in einem kurzen Übergangsbereich in einen größeren Durchmesser übergeht. Damit sind mit den erfindungsgemäßen Verfahren rohrförmige Kunststoffprofile 6.1 mit integrierter Muffe herstellbar, wodurch ein zusätzlicher Arbeitsgang zur nachträglichen Herstellung einer solchen Muffe wegfallen kann.

In dem in Fig.1 gezeigten Ausführungsbeispiel werden die Profile 6.1 gemäß den Fig. 2 bis 3.1 in der Extrusionslinie hergestellt. Um sie zu vereinzeln werden sie an den Schnittstellen 6.2 in der nicht dargestellten Sägeeinheit der Extrusionslinie von einander getrennt.

## Patentansprüche

1. Verfahren zur Herstellung rohrförmiger Kunststoffprofile, wobei eine Rohrextrusionslinie mit einem Extruder (1), einer stufenlos auf verschiedene Durchmesser einstellbaren Kalibrierhülse (10) und einer Abzugseinheit (7) mit regelbarer Abzugsgeschwindigkeit verwendet wird, **dadurch gekennzeichnet, dass** rohrförmige Kunststoffprofile, deren Dimension sich über die Länge ändert, hergestellt werden, wobei die Kalibrierhülse (10) in festgelegten Zeitintervallen abwechselnd auf- und zugefahren wird.

2. Verfahren nach Anspruch 1, **dadurch gekennzeichnet, dass** gleichzeitig die Abzugsgeschwindigkeit verringert bzw. erhöht wird.

3. Verfahren nach Anspruch 1 oder 2, **dadurch gekennzeichnet, dass** gleichzeitig der Massendurchsatz durch den Extruder (1) verringert bzw. erhöht wird.

## Claims

1. Method for producing tubular plastic sections, wherein a pipe extrusion line with an extruder (1), a continuous calibration sleeve (10) with adjustable diameter and a haul-off unit (7) with variable haul-off speed are used, **characterised in that** tubular plastic sections are produced the dimension of which varies over their length, wherein a calibration sleeve (10) is opened and closed alternately at fixed time intervals.

2. Method according to claim 1, **characterised in that** simultaneously the haul-off speed is increased or decreased.

3. Method according to claim 1 or 2, **characterised in that** simultaneously the mass flow through the extruder (1) is increased or decreased.

## Revendications

1. Procédé de fabrication de profils en plastique de forme tubulaire, une ligne d'extrusion de tubes étant utilisée avec une extrudeuse (1), une buse de calibrage (10) réglable sans palier sur différents diamètres et une unité de retrait (7) à vitesse de retrait réglable, **caractérisé en ce que** des profils en plastique de forme tubulaire dont les dimensions changent sur la longueur du tube sont fabriqués, la douille de calibrage (10) étant ouverte et fermée en alternance à intervalles préfixés.

2. Procédé selon la revendication 1, **caractérisé en ce que** la vitesse d'extrusion peut être réduite et/ou augmentée simultanément..

3. Procédé selon la revendication 1 ou 2, **caractérisé en ce que** le débit de masse passant par l'extrudeuse (1) peut être réduit et/ou augmenté simultanément.
